# EUROPEAN PATENT APPLICATION

(11) **EP 4 790 177 A1**
(43) Date of publication of application: **12.08.2026**
(21) Application number: 25382113.6
(22) Date of filing: 11.02.2025
(51) Int. Cl.: D04H 1/413, D04H 1/4209, D04H 1/542, D04H 1/732, H01M 50/249, H01M 50/293

(54) **NONWOVEN MAT**

(71) Applicant: ORKLI, S. COOP., 20240 Ordizia (Gipuzkoa) (ES); BELCHEM GmbH, 09599 Freiberg (DE)
(72) Inventor: HERNÁNDEZ CONDE, Iñigo, E-20240 Ordizia, Gipuzkoa (ES); BORONAT ELIZALDE, Marco, E-20240 Ordizia, Gipuzkoa (ES); GONZALEZ SALVADOR, Francisco Javier, E-20240 Ordizia, Gipuzkoa (ES); AIZPURUA MAKATZAGA, Amaia, E-20240 Ordizia, Gipuzkoa (ES); LARRAÑAGA BASTERRICA, Garikoitz, E-20240 Ordizia, Gipuzkoa (ES); SCHMIDT, Francisca, D-09599 Freiberg (DE); HEIDRICH, Dario, D-09599 Freiberg (DE)
(74) Representative: ABG Intellectual Property Law, S.L.

(57) **Abstract**

The present invention refers to a nonwoven mat for thermal insulation and protection from fire, a method for the preparation of said nonwoven mat, a partition member, a battery housing and a battery pack; and to the use of the nonwoven mat, the partition member and the battery housing for thermal insulation and protection from fire.

## Description

### FIELD OF THE INVENTION

The present invention relates to the area of insulation and protection from fire. More specifically, the present invention relates to a nonwoven mat for thermal insulation and protection from fire, a method for the preparation of said nonwoven mat, a partition member, a battery housing, a battery pack and to the use of the nonwoven mat, the partition member, and the battery housing.

### BACKGROUND

Rechargeable energy storage systems consisting of multiple battery cells, such as lithium-ion cells, are widely known and employed in various sectors, including electric and hybrid vehicles. Occasionally, rechargeable battery cells may experience internal overheating, leading to an uncontrollable self-heating condition that can result in a "thermal runaway" event. These events in lithium-ion cells can cause temperatures to rise to 1300°C or higher, as well as the release of gases, shrapnel, or particulates. As a result, it becomes crucial to interrupt or limit heat transfer from malfunctioning cells to other parts of the energy storage system to minimize or prevent damage.

Inorganic materials, particularly synthetic ones, possess excellent thermal properties and are widely used in applications requiring resistance to high temperatures. These materials are common components in the formulation of insulating materials. Accordingly, one potential solution to mitigate heat transfer during a thermal runaway event is to incorporate thermally insulating barriers made of synthetic inorganic materials between battery cells. However, the requirements for these insulating barriers to function effectively with batteries are stringent, and many existing solutions fail to meet the necessary mechanical performance standards.

WO2024235527 is directed to a nonwoven surface obtained by a method comprising a web forming and an infiltrating step. Said nonwoven surface comprised: a plurality of man-made inorganic fibers comprising hydroxyl groups (OH) on their surface, wherein said plurality of man-made inorganic fibers have a mean diameter equal or over 6 microns; a polymeric binder; and at least an infiltrated binder. In particular, WO2024235527 showed the effect of using different organic/inorganic infiltrated binders and infiltration conditions on the mechanical properties of the final nonwoven mat. However, as the specifications for an insulating barrier to work with batteries are variable and stringent, further work is needed to optimise the manufacturing processes and the products obtained.

As a result, there is a significant need for new materials and barriers that offer superior thermal insulation and fire protection while maintaining high levels of quality, performance, strength and durability.

### BRIEF DESCRIPTION OF THE INVENTION

The authors of the present invention have developed a nonwoven mat for thermal insulation and protection from fire, a method for the preparation of said nonwoven mat, a partition member, a battery housing and a battery pack.

In particular, it has been observed that the nonwoven mat of the present invention has a surprisingly structural integrity and mechanical properties significantly improved over previously disclosed thermal insulating mats. The mechanical properties of the nonwoven mat of the present invention, such as its deformation behavior under pressure, are particularly suitable for acting as thermal insulation and fire protection in battery-related applications.

An unexpectedly better mechanical response was observed for nonwoven mats comprising precipitated silica than when comprising other silica fillers such as silica aerogels. In particular, it has been observed that the curves for the data of the deformation rate (%) of the non-woven mats under pressure, showed higher pressure values for the non-woven mats comprising precipitated silica fillers than for those comprising silica aerogels for deformations equal or below 70%.

The applicants have also observed an improved solvent drainage during the nonwoven mat manufacturing process when precipitated silica fillers are used, leading to a reduction of defects and thickness of the final product. In addition, a good drainage allows the speed of the process to be increased, thereby reducing the time and cost of the process and the product.

Moreover, the applicants have observed that step (iv) directed to infiltrating under suction the drained nonwoven surface of step (iii) with a mixture comprising at least a binder to obtain an infiltrated drained nonwoven surface, is not always necessary when precipitated silica is added as filler in the dispersion of step (i) to obtain nonwoven mats with good mechanical properties.

Finally, it has been observed that adding a calendering step to the method of synthesis unexpectedly increases the density and stability of the nonwoven mat even at lower thicknesses.

The method of the present invention allows obtaining nonwoven mats with tunable and improved mechanical properties. In addition, since the method for the preparation of the nonwoven mat of the present invention is a simple, faster and inexpensive procedure, it can be applied for large-scale production of nonwoven mats.

Therefore, a first aspect of the invention is directed to a nonwoven mat for thermal insulation and protection from fire obtainable by a method comprising the steps of:
i) providing a dispersion comprising:
   - a plurality of man-made inorganic fibers comprising hydroxyl groups (OH) on their surface and wherein said plurality of man-made inorganic fibers have a mean diameter equal or over 6 microns;
   - a polymeric binder;
   - precipitated silica; and
   - a solvent;
ii) web forming the dispersion of step (i) to obtain a nonwoven surface;
iii) draining the nonwoven surface of step (ii) under suction until the nonwoven surface has less than a 65% by weigh of the solvent with respect to the total weight of the nonwoven surface;
iv) optionally, infiltrating under suction the drained nonwoven surface of step (iii) with a mixture comprising at least a binder to obtain an infiltrated drained nonwoven surface; and
v) heating the drained nonwoven surface obtained in step (iii) or the infiltrated drained nonwoven surface obtained in step (iv) at a temperature between 30 and 400°C to obtain a nonwoven mat;
vi) optionally, calendering the nonwoven mat of step (v).

In a second aspect, the present invention is directed to a method for the preparation of the nonwoven mat for thermal insulation and protection from fire comprising the steps of:
i) providing a dispersion comprising:
   - a plurality of man-made inorganic fibers comprising hydroxyl groups (OH) on their surface, wherein said plurality of man-made inorganic fibers have a mean diameter equal or over 6 microns;
   - a polymeric binder;
   - precipitated silica, and
   - a solvent;
ii) web forming the dispersion of step (i) to obtain a nonwoven surface;
iii) draining the nonwoven surface of step (ii) under suction until the nonwoven surface has less than a 65% by weigh of the solvent of the total weight of the nonwoven surface;
iv) optionally, infiltrating under suction the drained nonwoven surface of step (iii) with a mixture comprising at least a binder to obtain an infiltrated drained nonwoven surface; and
v) heating the drained nonwoven surface obtained in step (iii) or the infiltrated drained nonwoven surface obtained in step (iv), at a temperature between 30 and 400°C to obtain a nonwoven mat;
vi) optionally, calendering the nonwoven mat of step (v).

In a further aspect, the present invention is directed to a partition member adapted for forming a partition: (i) between two battery cells or (ii) between a single battery cell and a member other than said single battery cell, wherein the partition member comprises at least one nonwoven mat of the present invention as described in any of its particular embodiments or aspects.

In an additional aspect, the present invention is directed to a battery housing that defines at least a cavity for receiving at least one battery cell and preferably a plurality of battery cells forming a pack of cells; wherein the battery housing comprises the partition member of the present invention as described in any of its particular embodiments or aspects and/or the nonwoven mat as described in any of its particular embodiments or aspects.

In another aspect, the present invention is directed to a battery pack comprising:
- a plurality of batteries, and
- the partition member and/or the battery housing of the present invention as described in any of its particular embodiments or aspects.

In another aspect, the present invention is directed to the use of the nonwoven mat, the partition member, or the battery housing of the invention for thermal insulation, preferably for thermal insulation of batteries; more preferably for thermal insulation of batteries of electric vehicles.

In yet another aspect, the present invention is directed to the use of the nonwoven mat, the partition member, or the battery housing of the invention for fire protection, preferably for fire protection of batteries; more preferably for fire protection of batteries of electric vehicles.

### FIGURES

Figure 1: Image of a nonwoven surface being web formed.
Figure 2: Scanning electron microscopy micrograph of a nonwoven mat comprising SiOz aerogels.
Figure 3: Scanning electron microscopy micrograph of a nonwoven mat comprising precipitated silica.
Figure 4: Results for the deformation rate (%) under pressure (kPa) for nonwoven mats not having fillers and comprising different types of fillers (aerogels and precipitated silica).
Figure 5: Scanning electron microscopy micrographs of (a) silica aerogel, and (b) precipitated silica.

### DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

### Nonwoven mat

A first aspect of the invention is directed to a nonwoven mat for thermal insulation and protection from fire obtainable by a method comprising the steps of:
i) providing a dispersion comprising:
   - a plurality of man-made inorganic fibers comprising hydroxyl groups (OH) on their surface and wherein said plurality of man-made inorganic fibers have a mean diameter equal or over 6 microns;
   - a polymeric binder;
   - precipitated silica; and
   - a solvent;
ii) web forming the dispersion of step (i) to obtain a nonwoven surface;
iii) draining the nonwoven surface of step (ii) under suction until the nonwoven surface has less than a 65% by weigh of the solvent with respect to the total weight of the nonwoven surface;
iv) optionally, infiltrating under suction the drained nonwoven surface of step (iii) with a mixture comprising at least a binder to obtain an infiltrated drained nonwoven surface; and
v) heating the drained nonwoven surface obtained in step (iii) or the infiltrated drained nonwoven surface obtained in step (iv) at a temperature between 30 and 400°C to obtain a nonwoven mat;
vi) optionally, calendering the nonwoven mat of step (v).

In a particular embodiment, the nonwoven mat for thermal insulation and protection from fire obtainable by a method consisting of the steps of:
i) providing a dispersion comprising:
   - a plurality of man-made inorganic fibers comprising hydroxyl groups (OH) on their surface and wherein said plurality of man-made inorganic fibers have a mean diameter equal or over 6 microns;
   - a polymeric binder;
   - precipitated silica; and
   - a solvent;
ii) web forming the dispersion of step (i) to obtain a nonwoven surface;
iii) draining the nonwoven surface of step (ii) under suction until the nonwoven surface has less than a 65% by weigh of the solvent with respect to the total weight of the nonwoven surface;
iv) optionally, infiltrating under suction the drained nonwoven surface of step (iii) with a mixture comprising at least a binder to obtain an infiltrated drained nonwoven surface; and
v) heating the drained nonwoven surface obtained in step (iii) or the infiltrated drained nonwoven surface obtained in step (iv) at a temperature between 30 and 400°C to obtain a nonwoven mat;
vi) optionally, calendering the nonwoven mat of step (v).

### Step (i)

In a particular embodiment, the dispersion of step (i) consists of:
- a plurality of man-made inorganic fibers comprising hydroxyl groups (OH) on their surface, wherein said plurality of man-made inorganic fibers have a mean diameter equal or over 6 microns;
- a polymeric binder;
- precipitated silica;
- optionally, opacifiers, adhesives, flame retardants, thickeners and/or surfactants; and
- a solvent.

In another particular embodiment, the dispersion of step (i) consists of:
- a mixture of:
   a) a plurality of man-made inorganic fibers comprising hydroxyl groups (OH) on their surface and having a loss on ignition (LOI) value of over 6%; and
   b) a plurality of man-made inorganic fibers having a loss on ignition (LOI) value of below a 4%;
   wherein said plurality of man-made inorganic fibers have a mean diameter equal or over 6 microns;
- a polymeric binder;
- precipitated silica;
- optionally, opacifiers, adhesives, flame retardants, viscosifiers and/or surfactants; and
- a solvent.

In the context of the present invention, the expression "loss on ignition (LOI)" value is directed to the weight loss percentage of the material during the firing process measured according to standard industry methods such as ISO 3262-20. For instance, the material is typically heated (i.e. fired) at about 1000°C until a constant weight is achieved and the weight loss percentage is then calculated regarding the initial weight as follows: LOI (%) = [(Initial mass - Final mass) / Initial mass] × 100.

### Fibers

In the context of the present invention, the expression "man-made inorganic fibers" refers to fibers not occurring naturally, such as artificial fibers that consist essentially of inorganic materials such as ceramic oxides, non-oxide ceramics or combinations thereof. Non-limiting examples of "ceramic oxides" are alumina, alumina-silica, alumina-boria-silica, aluminum silicate, aluminum borosilicate, alumina-mullite, silica, zirconia, zirconia-silica, titania, titania-silica, rare earth oxides or a combination thereof. Non limiting examples of "non-oxide ceramics" are silicon carbide, silicon carbonitride, silicon oxycarbide, silicon titanium oxycarbide, silicon nitride, aluminum nitride, silicon titanium, silicon alumina nitride or a combination thereof. Said man-made inorganic fibers must have a mean diameter equal or over 6 microns.

In a particular embodiment, the man-made inorganic fibers of the nonwoven mat are man-made inorganic mineral fibers. In the context of the present invention the term "mineral" refers to fibers that are non-metallic inorganic fibers.

In a particular embodiment, the man-made inorganic fibers of the nonwoven mat are selected from commercially available man-made inorganic fibers. Non-limiting examples of commercially available man-made inorganic fibers include glass fibers, quartz fibers, aluminum borosilicate fibers, aluminum silicate, silica fibers, non-oxide fibers (for example, silicon carbide, silicon carbonitride, silicon oxycarbide, silicon titanium oxycarbide), as well as those man-made inorganic oxide fibers marketed by 3M Company (Saint Paul, MN) under the trade designation "NEXTEL" (for example, "NEXTEL 312", "NEXTEL 440", "NEXTEL 550", "NEXTEL 610", "NEXTEL 650", and "NEXTEL 720"), by BELCHEM GmbH (Freiberg, Germany) under the trade designation "BELCOTEX^{®}", by COI Ceramics Company under the trade designation of "NICALON FIBER" (for example, "NICALON", "Hl-NICALON" and "Hi-Nicalon Type S"), by UBE Industries under the trade designation of "Tyranno fiber" or by Hitco Carbon Composites, Inc. (Gardena, CA) under the trade designation "REFRASIL".

In a particular embodiment, the man-made inorganic fibers are selected from fibers that comprise substantially alumina (Al₂O₃), alumina-mullite, alumina-silica, aluminum borosilicate, aluminium silicate, silica (SiO₂) or a mixture thereof.

In a more particular embodiment, the man-made inorganic fibers are selected from alumina-silica based fibers, aluminium silicate based fibers, silica (SiO₂) based fibers or a mixture thereof.

In an embodiment, the man-made inorganic fibers comprising hydroxyl groups (OH) on their surface have a composition comprising Si; preferably a composition comprising Al and Si; more preferably a composition comprising SiO₂ and Al₂O₃. In a particular embodiment, the man-made inorganic fibers have hydroxyl groups (OH) on their surface and comprise silicon atoms in their composition; wherein the hydroxyl groups are covalently bonded to the silicon atoms of said fibers.

In a particular embodiment, the man-made inorganic fibers have a composition comprising more than 50% (wt.) of SiO₂; preferably more than 60% (wt.) of SiO₂; preferably from 70 to 99% (wt.) of SiO₂; more preferably a composition further comprising from 1 to 20% (wt.) of Al₂O₃.

In a more particular embodiment, the man-made inorganic fibers have a composition comprising:
- from 80 to 99% (wt.) of SiO₂;
- from 1 to 20% (wt.) of Al₂O₃; and
- one or more components selected from Na₂O, K₂O, CaO, MgO, B₂O₃, TiO₂, Fe oxides, ZrO₂, BaO, PbO, ZnO, Cr₂O₃ and F.

In a more particular embodiment, the man-made inorganic fibers have a composition consisting essentially of:
- from 80 to 99% (wt.) of SiO₂;
- from 1 to 20% (wt.) of Al₂O₃; and
- one or more components selected from Na₂O, K₂O, CaO, MgO, B₂O₃, TiO₂, Fe oxides, ZrO₂, BaO, PbO, ZnO, Cr₂O₃ and F.

The hydroxyl groups of the man-made inorganic fibers comprising hydroxyl groups on their surface are covalently bonded to the surface of the man-made inorganic fibers; preferably to Si atoms of the man-made inorganic fibers. In an more particular embodiment, the man-made inorganic fibers comprising hydroxyl groups on their surface have a composition comprising Si atoms, wherein at least a 20% of the Si atoms are covalently bonded to hydroxyl groups; preferably wherein at least a 25% of the Si atoms are covalently bonded to hydroxyl groups; more preferably wherein between 30 and 50% of the Si atoms are covalently bonded to hydroxyl groups; more preferably wherein about 40% of the Si atoms are covalently bonded to hydroxyl groups.

In a more particular embodiment, the man-made inorganic fibers comprising hydroxyl groups (OH) on their surface have been obtained by a method comprising the step of extracting with an acid those fibers; preferably wherein the man-made inorganic fibers have a composition comprising from 70 to 99% (wt.) of SiO₂; more preferably wherein the man-made inorganic fibers have a composition comprising:
- from 80 to 99% (wt.) of SiO₂;
- from 1 to 20% (wt.) of Al₂O₃; and
one or more components selected from Na₂O, K₂O, CaO, MgO, B₂O₃, TiO₂, Fe oxides, ZrO₂, BaO, PbO, ZnO, Cr₂O₃ and F.

In a particular embodiment, the man-made inorganic fibers have
(i) a composition comprising:
   - from 85 to 99% (wt.) of SiO₂;
   - from 1 to 5% (wt.) of Al₂O₃; and
   - one or more components selected from Na₂O, K₂O, CaO, MgO, B₂O₃, TiO₂, Fe oxides, ZrO₂, BaO, PbO, ZnO, Cr₂O₃ and F; and/or
(ii) a composition comprising:
   - from 80 to 95% (wt.) of SiO₂;
   - from 5 to 20% (wt.) of Al₂O₃; and
   - one or more components selected from Na₂O, K₂O, CaO, MgO, B₂O₃, TiO₂, Fe oxides, ZrO₂, BaO, PbO, ZnO, Cr₂O₃ and F.

In a more particular embodiment, the man-made inorganic fibers have a composition comprising:
- from 90 to 98% (wt.) of SiO₂;
- from 2 to 5% (wt.) of Al₂O₃; and
one or more components selected from Na₂O, K₂O, CaO, MgO, B₂O₃, TiO₂, Fe oxides, ZrO₂, BaO, PbO, ZnO, Cr₂O₃ and F; preferably the composition comprises from 0 to 3 % (wt.) of Na₂O and/or K₂O; and one or more components selected from CaO, MgO, B₂O₃, TiO₂, Fe oxides, ZrO₂, BaO, PbO, ZnO, Cr₂O₃ and F.

In a more particular embodiment, the man-made inorganic fibers have a composition comprising:
- from 81 to 94% (wt.) of SiO₂;
- from 6 to 19% (wt.) of Al₂O₃; and
- one or more components selected from Na₂O, K₂O, CaO, MgO, B₂O₃, TiO₂, Fe oxides, ZrO₂, BaO, PbO, ZnO, Cr₂O₃ and F; preferably comprising from 2 to 12 % (wt.) of ZrOz and one or more components selected from Na₂O, K₂O, CaO, MgO, B₂O₃, TiO₂, Fe oxides, BaO, PbO, ZnO, Cr₂O₃ and F.

In a more particular embodiment, the man-made inorganic fibers comprise Al and Si in a molar ratio of about 1:18 of AI:Si.

In the context of the present invention the term "wt%" or "wt." refers to a weight percentage of the total weight of the product or the composition as known in the art.

In an embodiment, the man-made inorganic fibers of step (i) have a mean diameter equal or over 7 microns.

In an embodiment, the man-made inorganic fibers of step (i) have a mean diameter equal or between 6 and 20 microns; preferably equal or between 7 and 15 microns; more preferably have a mean diameter of about 7.5 microns.

In the context of the present invention, the expression "mean diameter" regarding the fibers is a synonym as "mean thickness" of the fibers and it's a parameter that has been measured as the arithmetic mean of the diameters of a representative sample of the plurality of man-made inorganic fibers, in addition, said parameter has been measured by means known in the art such as scanning microscopy. In the context of the present invention the expression "fiber diameter" or "fiber diameters" relates to the shorter dimension of a fiber. In the context of the present invention the expression "fiber length" or "fiber lengths" relates to the longer dimension of a fiber. Said parameter has been measured by means known in the art such as scanning microscopy.

In a particular embodiment, the man-made inorganic fibers are chopped fibers. In a particular embodiment, the man-made inorganic fibers are dispersed. In the context of the present invention, the term "dispersed" means the opposite of aggregated or agglomerated. Non-limiting examples of individual man-made inorganic fibers suitable for the present invention include straight, crimped or roving fibers.

In a particular embodiment, the plurality of man-made inorganic fibers comprising hydroxyl groups (OH) on their surface are a mixture of: (i) fibers having a loss of ignition (LOI) value of over 6%, and (ii) fibers having a loss on ignition (LOI) value of below 4%; preferably wherein each type of fiber is present in about a 50 % in weight of the total weight of the fibers.

In a more particular embodiment, man-made inorganic fibers having a loss on ignition (LOI) value of below 4% comprise Si atoms wherein less than a 15% of those Si atoms are covalently bonded to an hydroxyl group; preferably wherein less than 10%; more preferably less than 5%; even much more preferably less than 3%, 2% or 1%.

In a more particular embodiment, the man-made inorganic fibers having a loss of ignition (LOI) value of over 6% are in an amount below a 60% by weight of the total weight of man-made inorganic fibers; preferably below a 50%; more preferably below a 40%; even much more preferably below a 30%.

In a more particular embodiment, the man-made inorganic fibers having a loss of ignition (LOI) value of over 6% are in an amount from 10 to 60% by weight of the total weight of man-made inorganic fibers; preferably from 15 to 50%; more preferably from 20 to 40%; even much more preferably from 25 to 30%.

In a particular embodiment, the dispersion of step (i) further comprises man-made inorganic fibers not having hydroxyl groups (OH), particularly not having hydroxyl groups (OH) on their surface, such as annealed man-made inorganic fibers. The man-made inorganic fibers not having hydroxyl groups (OH) may present all the characteristics defined above for the man-made inorganic fibers of step (i) in any of the embodiments described above.

The applicants have observed an improvement in the deformation behavior of the nonwoven mat under pressure when fibers with diameters equal or between 6 and 20 microns, in particular of about 7.5 microns were used in combination with precipitated silica. In addition, better drainage and a better retention of fillers was observed.

The authors of the present invention have observed a reduced amount of defects when the nonwoven mat comprises a mixture of: (i) fibers having a loss of ignition (LOI) value of over 6%, and (ii) fibers having a loss on ignition (LOI) value of below 4%. In addition, the authors have observed that the nonwoven mat shrinks less when treated at high temperatures when the nonwoven mat comprises a mixture of different man-made inorganic fibers, improving its quality.

### Binder

In the context of the present invention, the term "binder" refers to a substance that helps the man-made inorganic fibers to stick together by adhesion or cohesion. In the context of the present invention the expression "polymeric binder" refers to a binder in the dispersion of step (i) and the expression "at least a binder" refers to a binder or binders optionally added in the mixture of step (iv), or in the nonwoven mat.

In a particular embodiment, the polymeric binder is a polymer selected from a thermoplastic polymer, polyacrylate, polyurethane, epoxy resins, phenol resins, thermo curing resins, light sensitive resins, polyester resins or mixtures thereof.

In a particular embodiment, the polymeric binder is selected from poly(methyl methacrylate) (PMMA), polycarbonate (PC), polystyrene (PS), polypropylene (PP), polyethylene (PE), polyglycolide (PGA), poly(propylenefumarate) (PPF), polycyanoacrylate (PCA), polycaprolactone (PCL), poly(glycerol sebacate) (PGS), poly(glycerol sebacate acrylate) (PGSA), polyvinylidenefuoride (PVDF), polyvinylidene chloride (PVDC), polyethylene terephthalate (PET), polybutylene therephtalate (PBT), polyphenylene oxide (PPO), polyvinyl chloride (PVC), cellulose acetate (CA), cyclic olefin copolymer (COC), ethylene vinyl acetate (EVA), ethylene vinyl alcohol (EVOH), polytetrafluoroethylene (PTFE), fluorinated ethylene propylene (FEP), perfluoroalkoxy (PEA), ethylene tetrafluoroethylene (ETFE), polyethersulfone (PES), chlorinated poly ethylene (CPE), polylactic acid (PLA), poly 3-hydroxybutyrate (P3HB), polybutylene adipate (PBA), polyethylene adipate (PEA), polybutylene succinate (PBS), polyphenylene sulfide (PPS), polysulfone (PSU), polytrimethylene terephthalate (PTT), polyurethane (PU), polyvinyl acetate, polyvinylidene chloride (PVDC), styrene acrylonitrile (SAN), polyetherketones (PEEK), polyvinylalcohol (PVA), polyhydroxyethylmethacrylate (PHEMA), poly(N-isopropylacrylamide) (PNIPAAm) and mixtures thereof.

In a particular embodiment, the polymeric binder is selected from poly(methyl methacrylate) (PMMA), polycarbonate (PC), polystyrene (PS), polypropylene (PP), polyethylene (PE), polyethylene terephthalate (PET), polybutylene therephtalate (PBT), polyphenylene oxide (PPO), polyvinyl chloride (PVC), cellulose acetate (CA), cyclic olefin copolymer (COC), ethylene vinyl acetate (EVA), ethylene vinyl alcohol (EVOH), polytetrafluoroethylene (PTFE), fluorinated ethylene propylene (FEP), perfluoroalkoxy (PEA), ethylene tetrafluoroethylene (ETFE), polyethersulfone (PES), chlorinated poly ethylene (CPE), polylactic acid (PLA), poly 3-hydroxybutyrate (P3HB), polybutylene adipate (PBA), polyethylene adipate (PEA), polybutylene succinate (PBS), polyphenylene sulfide (PPS), polysulfone (PSU), polytrimethylene terephthalate (PTT), polyurethane (PU), polyvinyl acetate, polyvinylidene chloride (PVDC), styrene acrylonitrile (SAN), polyetherketones (PEEK), polyvinylalcohol (PVA), polyhydroxyethylmethacrylate (PHEMA), poly(N-isopropylacrylamide) (PNIPAAm) and mixtures thereof.

In a particular embodiment, the polymeric binder is a vinyl polymer selected from polyvinyl chloride (PVC), poly(vinyl acetate), polyvinyl alcohol (PVA) and mixtures thereof; preferably polyvinyl alcohol (PVA).

In a particular embodiment, the polymeric binder in the dispersion of step (i) is in between 1 and 25 % by weight of the total weight of the solids added to the dispersion; preferably between 2 and 20 %; more preferably between 4 and 18 %; even much more preferably of about 5%, 6%, 7%, 8%, 9%, 10%, 11%, 12%, 13% or 14%.

In a particular embodiment, the polymeric binder is in between 1 and 25 % by weight of the total weight of the nonwoven mat; preferably between 2 and 20 %; more preferably between 4 and 18 %; even much more preferably of about 5%, 6%, 7%, 8%, 9%, 10%, 11%, 12%, 13% or 14%.

In a more particular embodiment, the polymeric binder is in between 2 and 15 kg/m³ in the nonwoven mat; preferably between 3 and 14 kg/m³; more preferably between 4 and 12 kg/m³.

In a particular embodiment, the polymeric binder is a polymer fiber. In an alternative embodiment, the polymeric binder of step (i) is not a polymeric fiber.

The authors of the present invention have observed that a method comprising a first step of providing a dispersion comprising man-made inorganic fibers comprising hydroxyl groups (OH) on their surface and with a mean diameter equal or over 6 microns, a polymeric binder, precipitated silica, and a solvent results in a uniform nonwoven mat with a reduced amount of defects.

### Precipitated silica

The dispersion of step (i) comprises precipitated silica.

In a particular embodiment, precipitated silica is obtained by a method comprising the steps of
- reacting a precursor comprising silicon, such as sodium silicate, in an aqueous medium under acid catalyst to obtain a product comprising insoluble SiO₂; preferably under stirring;
- precipitating, filtering, optionally washing, and drying the insoluble SiO₂ from the product comprising SiO₂ to obtain precipitated silica.

In a particular embodiment, the drying step of the precipitated silica preparation process comprise spray or rotary drying. In a more particular embodiment, the precipitated silica may be further processed to modify its surface properties and/or particle size.

In an embodiment, the formation of a gel is avoided preferably by stirring preferably at high temperatures, during the method of synthesis of precipitated silica.

In a particular embodiment, the precipitated silica is hydrophobic or hydrophilic; preferably hydrophobic.

In a more particular embodiment the precipitated silica is an amorphous precipitated silica; more preferably a hydrophobic amorphous precipitated silica.

In a particular embodiment, the precipitated silica comprises alkyl groups on its surface; preferably alkyl groups having between 1 and 4 carbons; more preferably methyl groups.

In the context of the present invention, the expression "hydrophobic" is understood as known in the art. For example, the hydrophobicity of particles such as precipitated silica particles, can be measured using a water contact angle method as known in the art, where a water droplet is placed on a prepared surface of the particles, such as a pressed pellet or thin film. Then, a contact angle goniometer captures the angle formed between the droplet and the particle surface. Hydrophobic particles exhibit high contact angles (above 90°), indicating poor wetting, while hydrophilic particles show low angles (below 90°).

In an embodiment, the hydrophobic precipitated silica has water contact angle values of above 90° being measured by a water contact angle method as known in the art; preferably above 95°; more preferably above 100°.

In an embodiment, the hydrophilic precipitated silica has water contact angle values of below 90° being measured by a water contact angle method as known in the art; preferably below 85°; more preferably below 80°.

In a particular embodiment, the precipitated silica is in the form of particles or granules; preferably in the form of granules.

In a particular embodiment, the precipitated silica has a particle size of equal or between 1 and 30 micrometers; preferably equal or between 2 and 20 micrometers; even more preferably equal or between 4 and 15 micrometers; even much more preferably equal or between 5 and 12 micrometers; preferably of about 10 micrometers.

In the context of the present invention, the expression "particle size" regarding the precipitated silica it's a parameter that has been measured by laser diffraction; preferably as Dᵥ50 according to the ISO 13320. In particular, Dᵥ50 defines the point where 50% of the particles of the sample's volume measured by laser diffraction are smaller and 50% bigger than that certain particle diameter as known in the art.

In a particular embodiment, the precipitated silica is in the dispersion of step (i) in between 0.01 and 0.50 g/I ; preferably between 0.02 and 0.25 g/l; more preferably between 0.03 and 0.10 g/l.

In a particular embodiment, the precipitated silica is in between 10 and 70 % by weight of the total weight of the solids added to the dispersion; preferably between 15 and 65 %; more preferably between 20 and 60%.

In a particular embodiment, the precipitated silica is in between 10 and 70 % by weight of the total weight of the nonwoven mat; preferably between 15 and 65 %; more preferably between 20 and 60%.

In a more particular embodiment, the precipitated silica is in between 2 and 60 kg/m³ in the nonwoven mat; preferably between 5 and 55 kg/m³; more preferably between 10 and 45 kg/m³.

Non limiting examples of precipitated silica that might be used in the present invention are hydrophilic or hydrophobic precipitated silica. Precipitated silica is commercially available. Some non-limiting examples of precipitated silica include those from the companies EVONIKO, and SOLVAY^{®}.

An unexpectedly better mechanical response was observed for nonwonven mats comprising precipitated silica than when comprising other silica fillers such as silica aerogels. In particular, it has been observed that the curves for the data of the deformation rate (%) of the non-woven mats under pressure, showed higher pressure values for the non-woven mats comprising precipitated silica fillers than for those comprising silica aerogels for deformations below 70%. The applicants have also observed an improved solvent drainage during the nonwoven mat manufacturing process when precipitated silica fillers are used in comparison with other fillers, resulting in a reduction of defects and thickness of the final product. In addition, good dewatering allows the speed of the process to be increased, thereby reducing the time and cost of the process and the product. Moreover, the applicants have observed that step (iv) directed to infiltrating under suction with a mixture comprising at least a binder, is not always necessary to obtain nonwoven mats with good mechanical properties when precipitated silica is added as filler in the dispersion of step (i).

In the context of the present invention the expression "dispersion" refers to a mixture or a slurry of solids, such as man-made inorganic fibers, polymeric binder, and precipitated silica, dispersed in a solvent such as water or an aqueous solution.

Non-limiting examples of solvents suitable for the present invention are methanol, 2-propanol, chloroform, toluene, anisole, cyclohexane, dimethyl formamide, methanol, dichloromethane, trichloroethane, water, acetone, ethyl acetate, N-methyl-2-pyrrolidone and mixtures thereof. In a particular embodiment, the dispersion of step (i) comprises a solvent selected from methanol, ethanol and water; preferably water.

In a particular embodiment, the dispersion of step (i) is stable. The dispersion provided in step (i) may be prepared by dispersing the man-made inorganic fibers, the polymeric binder and precipitated silica and, optionally, other additives, in a suitable solvent by applying energy via mechanical methods known in the art for example by means of dispersers, agitators or by ultrasonic baths and or probes. Other alternatives known in the art to prepare stable dispersions that are suitable for the invention include the addition of surface tension control additives (surfactants) to the dispersion, or modification of the man-made inorganic fibers surface by bound or unbound ligand molecules. The dispersion quality may be assessed by the stability of the dispersions during a certain time without flocculation or precipitation. In particular, the man-made inorganic fibers should not aggregate and flocculate in the time frame of the fabrication process, i.e.: from several minutes to hours. Turbidimetry or nephelometry and/or dynamic light scattering can be used for monitoring the stability of the dispersions.

The authors of the present invention have observed that the use of a polymeric binder in the dispersion improves the stability of said dispersion, i.e. reduces the precipitation and/or flocculation of the man-made inorganic fibers.

In some embodiments, the dispersion further comprises one or more additive admixtures. In some embodiments, the one or more additive admixtures are chosen from opacifiers, adhesives, flame retardants, thickeners and/or surfactants and/or man-made inorganic precursors.

In an embodiment, the dispersion of step (i) or the mixture of step (iv) further comprises one or more suitable opacifiers; preferably inorganic opacifiers; more preferably inorganic opacifiers selected from carbides, oxides, hydroxides, carbonates, sulfates, silicates, phyllosilicates and mixtures thereof.

In an embodiment, the opacifier is selected from the group comprising titanium dioxide, silicon carbide, zinc oxide, barium sulfate, calcium carbonate, kaolin clay, talc, aluminum hydroxide, mica, zirconium dioxide and mixtures thereof; preferably titanium dioxide and silicon carbide.

In the context of the present invention, an "opacifier" is a substance of compound added to a product to reduce its transparency or increase its opacity as known in the art.

In an embodiment, the dispersion of step (i) or the mixture of step (iv) further comprises one or more suitable adhesives. In an embodiment, the adhesive is a polymeric adhesive; preferably an acrylic polymeric adhesive; more preferably a water-based polymer dispersion made from acrylic monomers; much more preferably a water-based polymer dispersion made from acrylic-ester monomers.

In an embodiment, the dispersion of step (i) or the mixture of step (iv) further comprises one or more suitable flame retardants. In an embodiment, suitable flame retardants for the present invention comprise reactive and additive flame retardants as known in the art. The choice of flame retardant often depends on the intended service application of the formulation and the attendant flammability testing scenario governing that application as known in the art. In a more particular embodiment, the flame retardant of the present invention is selected from: an organic flame retardant such as an organohalogen compound, organophosphorus compound, melamine or polyols; an inorganic flame retardant such as aluminium hydroxide (ATH), magnesium hydroxide (MDH), huntite and hydromagnesite, aluminum phosphate; or mixtures thereof. Non-limiting examples of such flame retardants include chlorinated phosphate esters, chlorinated paraffins, melamine, ammonium polyphosphates, aluminum phosphates, polyols and mixtures thereof. In a particular embodiment, the flame retardant is a mixture of a phosphorus containing polyols and organic phosphinates.

In a particular embodiment, the dispersion of step (i) or the mixture of step (iv) further comprises at least one thickener or viscosifier; preferably a polymeric thickener. In the context of the present invention, the term "thickener" refers to a compound that increases the density of the dispersion of step (i). Suitable thickeners according to the present invention include colloidal alumina, sodium alginate (E-401), potassium alginate (E-402), ammonium alginate (E-403), calcium alginate (E-404), the ammonium salt of an acrylic polymer (for example those from TEXIPOL^{®}), and mixtures thereof.

In a particular embodiment, the dispersion of step (i) or the mixture of step (iv) further comprises at least one surfactant. Suitable surfactants include anionic surfactants, cationic surfactants, nonionic surfactants, amphoteric surfactants or combinations thereof. Exemplary of the anionic surfactant are carboxylic acid, sulfuric acid ester, sulfonic acid, and phosphoric acid ester type surfactants. Exemplary of the cationic surfactant are amine salt, primary amine salt, secondary amine salt, tertiary amine salt, and quaternary amine salt type surfactants. Exemplary of the nonionic surfactant are ester, ester-ether, and ether type surfactants. Exemplary of the amphoteric surfactant are amino acid and sulfo-betaine type surfactants.

Without being bound to any theory in particular, the authors of the present invention observed that the use of additives improves the dispersion of the fibers in the nonwoven mat. Without being bound to any theory in particular, the authors of the present invention observe that the use of a polymeric binder improves the stability of the nonwoven mat.

### Step(ii)

In the present invention, the nonwoven mat is obtainable by the method described above that comprises a step (ii) of web forming said dispersion to obtain a nonwoven surface. In the context of the present invention, the expression "web forming" is an action known in the art that refers to forming a nonwoven surface that comprises fibers, a particular type of web forming are for example, wet laid and melt spun methods among others. In a particular embodiment the web forming step is performed using a Fourdrinier machine as known in the art.

In a particular embodiment, the step (ii) of web forming comprises wet laid the dispersion of step (i) to obtain a nonwoven surface. In an alternative particular embodiment, the step (ii) of web forming consist of wet laid the dispersion of step (i) to obtain a nonwoven surface.

In the context of the present invention, the expression "wet laid" is an action known in the art that refers to flowing a dispersion comprising at least fibers and a solvent, such as the one described on step (i) of the method of the present invention, to a moving belt wherein the fibers form a nonwoven surface.

### Step (iii)

A drained nonwoven surface is obtained after the step (iii) of draining the nonwoven surface of step (ii) under suction.

In a particular embodiment, the step of draining the nonwoven surface of step (ii) under suction is performed during a period of time between 1 and 300 seconds, preferably between 5 and 120 seconds, more preferably between 5 and 30 seconds.

In a particular embodiment, the step of draining the nonwoven surface under suction is performed at a difference of pressure between 1 mbar and 10 bar, preferably between 2 mbar and 1 bar, more preferably between 5 mbar and 200 mbar.

In a particular embodiment, the step of draining the nonwoven surface under suction refers to draining part of the solvent from the nonwoven surface under suction.

In the context of the present invention the expression "nonwoven surface" refers to a product, sheet, blanket, or layer comprising physically entangled man-made inorganic fibers, a polymeric binder that helps said man-made inorganic fibers to stick together by adhesion or cohesion and a solvent.

In a particular embodiment, the nonwoven surface obtained on step (iii) has iqual or less than a 60% by weight of the solvent of the total weight of the nonwoven surface; preferably less than 50% by weight, more preferably less than 35% by weight; even much more preferably less than 25% by weight, less than 20% by weight or less than 15% by weight.

Without being bound to any theory in particular, the authors of the present invention believe that drying the nonwoven surface under suction to reach less than 65% by weight of solvent of the total weight of the nonwoven surface, improves the interaction of the man-made inorganic fibers with the optional binders added on step (iv) improving the mechanical properties of the nonwoven mat of the present invention.

### Step (iv)

An infiltrated drained nonwoven surface is obtained after the optional step (iv).

In a particular embodiment, the optional step of infiltrating under suction the drained nonwoven surface of step (iii) with a mixture comprising at least a binder to obtain an infiltrated drained nonwoven surface, is performed during a period of time between 0.01 and 30 seconds, preferably between 0.1 and 15 seconds, more preferably between 0.5 and 10 seconds.

In a particular embodiment, the step of infiltrating under suction is performed at a difference of pressure between 1 mbar and 10 bar, preferably between 2 mbar and 1 bar, more preferably between 5 mbar and 200 mbar.

In a particular embodiment, the step of infiltrating under suction is performed at a suction rate of between 20 and 80% of the total suction rate.

In an embodiment, the binder of the mixture of step (iv) is an inorganic binder. In a particular embodiment, the binder of the mixture of step (iv) is selected from silica, alumina, aluminium phosphates, sodium silicate or mixtures thereof; preferably is colloidal silica or colloidal alumina; more preferably is colloidal silica.

In an embodiment, the binder of the mixture of step (iv) is an organic binder. In a more particular embodiment, the organic binder comprises silicone; poly(vinyl alcohol); ethylene, vinyl acetate or a mixture thereof; preferably ethylene, vinyl acetate or a mixture thereof.

In an embodiment, the binder of the mixture of step (iv) is silicone; preferably a hydrophilic silicone.

In an embodiment, the mixture of step (iv) comprises an organic binder, an inorganic binder, and optionally silicone.

In an even more particular embodiment, the organic binder is a dispersion comprising ethylene, vinyl acetate or a mixture thereof. In an embodiment, the dispersion further comprises a compound selected from acrylate, vinyl chloride and/or formaldehyde.

In a particular embodiment, the mixture of step (iv) further comprises a solvent; preferably a solvent selected from methanol, ethanol and water; more preferably water.

In a particular embodiment, the mixture of step (iv) comprises:
- an inorganic binder selected from silica, alumina, aluminium phosphates, sodium silicate or mixtures thereof;
- an organic binder comprising poly(vinyl alcohol), ethylene, vinyl acetate or a mixture thereof;
- optionally silicone;
- optionally a flame retardant; and
- water.

In a particular embodiment, the mixture of step (iv) consist of:
- an inorganic binder selected from silica, alumina, aluminium phosphates, sodium silicate or mixtures thereof;
- an organic binder comprising poly(vinyl alcohol), ethylene, vinyl acetate or a mixture thereof;
- optionally silicone;
- optionally a flame retardant; and
- water.

Without being bound to any theory in particular, the authors of the present invention believe that the optional step of infiltrating under suction the drained nonwoven surface with a mixture comprising at least a binder leads to a homogeneous dispersion of the binder through the whole thickness of the drained nonwoven surface and a better interaction of said binder with the man-made inorganic fibers, improving the mechanical properties of the final nonwoven mat.

### Step (v)

In the present invention, the nonwoven mat is obtainable by the method described above that comprises a step (v) of heating the drained nonwoven surface obtained in step (iii) or the infiltrated drained nonwoven surface obtained in step (iv), at a temperature between 30 and 400°C; preferably between 40 and 300°C.

In a particular embodiment, the heating of step (v) is performed at a temperature between 50 and 250°C, preferably between 100 and 200°C; more preferably between 120 and 180°C.

In a particular embodiment, the heating of step (v) is performed during between 5 seconds and 60 minutes; preferably during between 10 seconds and 40 minutes, more preferably during between 15 seconds and 30 minutes.

In a particular embodiment, the heating of step (v) is performed under air.

In another particular embodiment, the heating of step (iii) is performed by infrared radiation. In a particular embodiment, the heating of step (iii) is performed in a furnace; preferably in an infrared furnace.

In a particular embodiment, the heating of step (iii) is performed under infrared radiation and then, under air.

### Step (vi)

In the present invention the nonwoven mat is obtainable by the method described above that comprises an optional step (vi) of calendering the nonwoven mat; preferably by passing the nonwoven mat through counter-rotating rollers; preferably at a temperature of between 100 and 400°C; preferably between 200 and 300°C.

### Nonwoven surface

In the context of the present invention, the expression "nonwoven surface" refers to a product, sheet, blanket, or layer comprising: a plurality of physically entangled man-made inorganic fibers that comprise hydroxyl groups (OH) on their surface (that are not woven or knitted as understood in the art), wherein said plurality of man-made inorganic fibers have a mean diameter equal or over 6 microns, a polymeric binder, precipitated silica, optional additives such as opacifiers, adhesives, flame retardants, viscosifiers and/or surfactants, and a solvent. Said nonwoven surface has porosity; wherein the pores are the ones left by the man-made inorganic fibers and precipitated silica interstices. The expression "nonwoven surface" could also be referred to as "nonwoven product", "nonwoven sheet", "nonwoven blanket" or "nonwoven layer". The term "surface" regarding the nonwoven surface is understood as referring to a nonwoven product such as a nonwoven sheet, blanket or layer having a certain thickness in its shorter dimension, as known in the art.

In a particular embodiment, the nonwoven surface has a thickness equal or over 0.1 millimeters; preferably equal or over 0.5 millimeters; more preferably equal or over 1 millimeters.

In a particular embodiment, the nonwoven surface has a thickness equal or between 0.1 and 10 millimeters; preferably equal or between 0.5 and 8 millimeters; more preferably equal or between 1 and 5 millimeters.

### Nonwoven mat

The nonwoven mat of the present invention comprises:
- a plurality of man-made inorganic fibers comprising hydroxyl groups (OH) on their surface, wherein said plurality of man-made inorganic fibers have a mean diameter equal or over 6 microns;
- a polymeric binder;
- precipitated silica; and
- optionally, at least an infiltrated binder.

In an embodiment, the nonwoven mat consists of:
- a plurality of man-made inorganic fibers comprising hydroxyl groups (OH) on their surface, wherein said plurality of man-made inorganic fibers have a mean diameter equal or over 6 microns;
- a polymeric binder;
- precipitated silica;
- optionally, opacifiers, adhesives, flame retardants, thickeners and/or surfactants; and
- optionally, at least an infiltrated binder.

In a particular embodiment, the nonwoven mat has a density of at least 20 kg/m³; preferably at least 30 kg/m³; more preferably at least 40 kg/m³; even much more preferably at least 50 kg/m³.

In an embodiment, the nonwoven mat has a density of between 20 kg/m³ and 1000 kg/m³; preferably between 30 kg/m³ and 500 kg/m³; more preferably of between 40 kg/m³ and 200 kg/m³; much more preferably of between 50 kg/m³ and 180 kg/m³. The density of the mat has been calculated using methods known in the art such as by gravimetric methods, where mass per unit volume (Kg/m³) is determined by weighing a precisely cut sample; by optical and ultrasonic techniques, which analyze thickness and uniformity; or by X-ray or nuclear density gauges for non-contact measurement.

In an embodiment, the nonwoven mat of the present invention consist of:
- a plurality of man-made inorganic fibers comprising hydroxyl groups (OH) on their surface, wherein said plurality of man-made inorganic fibers have a mean diameter equal or over 6 microns; wherein the plurality of man-made inorganic fibers comprising hydroxyl groups (OH) on their surface are: a mixture of (i) fibers having a loss of ignition (LOI) value of over 6% and (ii) fibers having a loss on ignition (LOI) value of below 4%.
- precipitated silica;
- a polymeric binder;
- optionally, opacifiers, adhesives, flame retardants, thickeners and/or surfactants; and
- optionally, at least an infiltrated binder; and
preferably, wherein the nonwoven mat has a density of between 20 kg/m³ and 1000 kg/m³.

In a particular embodiment, the nonwoven mat comprises the at least a binder of step (iv) or its derivates homogeneously dispersed through the whole nonwoven mat, in particular, through its whole thickness. In the context of the present invention the expression "derivates of the at least a binder of step (iv)" refers to the compounds generated after heating the at least a binder on step (v).

The man-made inorganic fibers, the polymeric binder and/or the at least one infiltrated binder of the nonwoven mat of the invention may have all the characteristics described above for the man-made inorganic fibers, polymeric binder of step (i) or at least one binder of step (iv) respectively.

In a particular embodiment the nonwoven mat has a porosity of at least 50%, preferably at least 60%, more preferably at least 70 %; even much more preferably at least 80%.

In the context of the present invention the expression "porosity" in relation to the nonwoven surface or the nonwoven mat, refers to a void fraction created by the pores or the interstices among the fibers and the fillers. The porosity is understood as a fraction of the volume of voids over the total volume expressed as a percentage between 1% and 100%. Therefore, in the context of the present invention, the term "pore" in singular or plural refers to the interstices among the man-made inorganic fibers in any one of the nonwoven surface or mat. Preferably, said pores have averaged diameters between 1 and 100 microns; preferably between 5 and 50 microns.

In a particular embodiment, the nonwoven mat has a thickness equal or over 0.1 millimeters; preferably equal or over 0.5 millimeters; more preferably equal or over 1 millimeters.

In a particular embodiment, the nonwoven mat has a thickness equal or between 0.1 and 10 millimeters; preferably equal or between 0.5 and 8 millimeters; more preferably equal or between 1 and 5 millimeters.

In a more particular embodiment, the nonwoven mat obtainable by the method described above, optionally has at least an infiltrated binder (such as a binder or binders) through the whole nonwoven mat; preferably through the whole thickness of the nonwoven mat. In a particular embodiment, the at least an infiltrated binder is homogeneously distributed through the nonwoven mat.

The authors have observed that the optionally infiltrated binder or binders are homogeneously dispersed through the whole thickness of the nonwoven mat improving the mechanical and thermal conductivity properties of said nonwoven mat. In addition, the authors of the present invention have observed that the distribution of the polymericbinder, the precipitated silica and the optional infiltrated binder in the nonwoven mat and their interaction with the fibers are consequence of the different steps of the method of fabrication of said nonwoven mat, and affect the final characteristics of said mat such as their mechanical and thermal conductivity properties.

The nonwoven mat may present all the advantages and characteristics as defined above for the nonwoven mat obtained by the method of aspect 1 of the present invention or of any of its embodiments.

### Method

In another aspect, the present invention is directed to a method for the preparation of the nonwoven mat for thermal insulation and fire protection comprising the steps of:
i) providing a dispersion comprising:
   - a plurality of man-made inorganic fibers comprising hydroxyl groups (OH) on their surface, wherein said plurality of man-made inorganic fibers have a mean diameter equal or over 6 microns;
   - a polymeric binder;
   - precipitated silica; and
   - a solvent;
ii) web forming the dispersion of step (i) to obtain a nonwoven surface;
iii) draining the nonwoven surface of step (ii) under suction until the nonwoven surface has less than a 65% by weigh of the solvent of the total weight of the nonwoven surface;
iv) optionally, infiltrating under suction the drained nonwoven surface of step (iii) with a mixture comprising at least a binder to obtain an infiltrated drained nonwoven surface; and
v) heating the drained nonwoven surface obtained in step (iii) or the infiltrated drained nonwoven surface obtained in step (iv), at a temperature between 30 and 400°C to obtain a nonwoven mat;
vi) optionally, calendering the nonwoven mat of step (v).

In an embodiment, the method for the preparation of the nonwoven mat for thermal insulation consists of the following steps:
i) providing a dispersion comprising:
   - a plurality of man-made inorganic fibers comprising hydroxyl groups (OH) on their surface, wherein said plurality of man-made inorganic fibers have a mean diameter equal or over 6 microns;
   - a polymeric binder;
   - precipitated silica; and
   - a solvent;
ii) web forming the dispersion of step (i) to obtain a nonwoven surface;
iii) draining the nonwoven surface of step (ii) under suction until the nonwoven surface has less than a 65% by weigh of the solvent of the total weight of the nonwoven surface;
iv) optionally, infiltrating under suction the drained nonwoven surface of step (iii) with a mixture comprising at least a binder to obtain an infiltrated drained nonwoven surface; and
v) heating the drained nonwoven surface obtained in step (iii) or the infiltrated drained nonwoven surface obtained in step (iv), at a temperature between 30 and 400°C to obtain a nonwoven mat;
vi) optionally, calendering the nonwoven mat of step (v).

The methods described above may present all of the advantages and characteristics defined above for the method steps for the nonwoven mat of the present invention in any of its embodiments or aspects.

The method of the present invention allows obtaining nonwoven mats with tunable and improved mechanical properties. In addition, since the method for the preparation of the nonwoven mat of the present invention is a simple, fast and inexpensive method, it can be applied for large-scale production of nonwoven mats.

### Partition member, battery housing and battery pack.

In a further aspect, the present invention is directed to a partition member adapted for forming a partition between two battery cells or between a single battery cell and a member other than said single battery cell, wherein the partition member comprises at least one nonwoven mat of the present invention as described in any of its particular embodiments or aspects.

In a particular embodiment, the partition member consists of one or more nonwoven mats of the present invention as described in any of its particular embodiments or aspects; preferably consist of one nonwoven mat of the present invention as described in any of its particular embodiments or aspects.

In an additional aspect, the present invention is directed to a battery housing that defines at least a cavity, preferably an open cavity, for receiving, preferably housing, at least one battery cell and preferably a plurality of battery cells forming a pack of cells; wherein the battery housing comprises the partition member of the present invention as described in any of its particular embodiments or aspects and/or the nonwoven mat of the present invention as described in any of its particular embodiments or aspects.

In an additional aspect, the present invention is directed to a battery housing that comprises a nonwoven mat according to any of the previously disclosed embodiments, the battery housing defines at least a cavity, preferably an open cavity, for receiving, preferably housing, at least one battery cell and preferably a plurality of battery cells forming a pack of cells.

In a particular embodiment, the battery housing consist of at least one nonwoven mat according to any of the previously disclosed embodiments; in a more particular embodiment, the battery housing consist of one nonwoven mat according to any of the previously disclosed embodiments.

In a particular embodiment, the battery housing further comprises the partition member of the present invention as described in any of its particular embodiments or aspects.

In a particular embodiment, the plurality of battery cells comprises a partition member separating at least two cells or separating a single battery cell and a member other than said single battery cell; wherein the partition member is preferably the partition member of the present invention as described in any of its particular embodiments or aspects.

According to a preferred embodiment, the battery housing is made by blending one or more a die-cut sheets; preferably consisting of at least one nonwoven mat according to any of the previously disclosed embodiments; more preferably consisting of one nonwoven mat according to any of the previously disclosed embodiments. In a preferred embodiment the one or more bent die-cut sheets forms a base and one or more lateral walls.

In another aspect, the present invention is directed to a battery pack comprising:
- a plurality of batteries, and
- the battery housing of the present invention as described in any of its particular embodiments or aspects.

### Uses

In another aspect, the present invention is directed to the use of the nonwoven mat, the partition member or the battery housing of the invention as described in any of their particular embodiments or aspects, for thermal insulation; preferably for thermal insulation of batteries; more preferably for thermal insulation of batteries of electric vehicles.

In an alternative aspect, the present invention is directed to a method for thermally insulating an object or objects that comprises separating said object or objects from other object or objects with the nonwoven mat, the partition member or the battery housing of the invention as described in any of their particular embodiments or aspects; preferably wherein the object or objects are one or more batteries; more preferably one or more batteries of electric vehicles.

In another aspect, the present invention is directed to the use of the nonwoven mat, the partition member, or the battery housing of the invention as described in any of their particular embodiments or aspects for fire protection, preferably for protecting batteries from fire; more preferably for protecting electric vehicle batteries from fire.

In an alternative aspect, the present invention is directed to a method for protecting from fire an object or objects that comprises separating said object or objects from other object or objects with the nonwoven mat, the partition member or the battery housing of the invention as described in any of their particular embodiments or aspects; preferably wherein the object or objects are one or more batteries; more preferably one or more batteries of electric vehicles.

The partition member, the battery housing, the battery pack, the method for the preparation of the nonwoven mat, and the use of the nonwoven mat may present all the advantages and characteristics as defined above for the nonwoven mat of the first aspect of the present invention or of any of its embodiments.

Throughout the description and claims the word "comprises" and variations of the word, are not intended to exclude other technical features, additives, components or steps. Furthermore, the word "comprise" encompasses the case of "consisting of". Additional objects, advantages and features of the invention will become apparent to those skilled in the art upon examination of the description or may be learned by practice of the invention.

Furthermore, the present invention covers all possible combinations of particular and preferred embodiments described herein.

### EXAMPLES

The invention is illustrated by means of the following examples which in no case limit the scope of the invention.

### Example 1: Preparation of a nonwoven mat with different silica fillers.

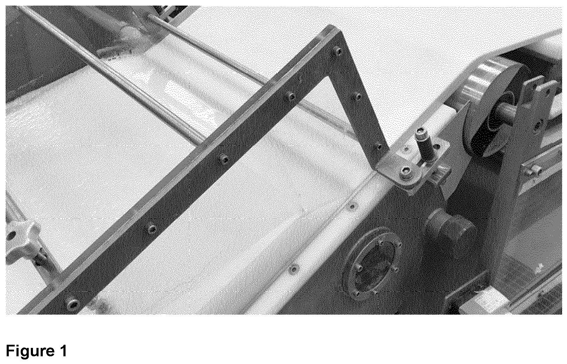

Nonwoven mats were prepared according to an adapted "web forming" technology (see figure 1) based in the technology employed by the paper industry that uses a Fourdrinier machine, having different fillers as follows.

Man-made inorganic fibers comprising hydroxyl groups (OH) on their surface and with a mean diameter equal or over 6 microns obtained under the trademark designation "BELCOTEX^{®}" from BELCHEM were used (for example BELCOTEX 225 fibers). Those man-made inorganic fibers were dispersed in water by applying mechanical energy using a disperser in an open vessel. Poly(vinyl alcohol)(PVA) fibers were also added to the dispersion as polymeric binder in an amount of about 0.06 g/l. The dispersion also comprised between 0.2 and 0.4 g/l of silica fillers in water. The following silica fillers (see Table 1 below) were tested:
(i) hydrophobic silica aerogels from under the trademark designation (a) Z2H1^{®} from Svenska or (b) "ENTERA EV^{®}" from CABOT;
(ii) hydrophobic precipitated silica under the trademark designation "SIPERNAT^{®}" from EVONIC; or
(iii) colloidal silica under the trademark designation "LUDOX^{®} HS 40".

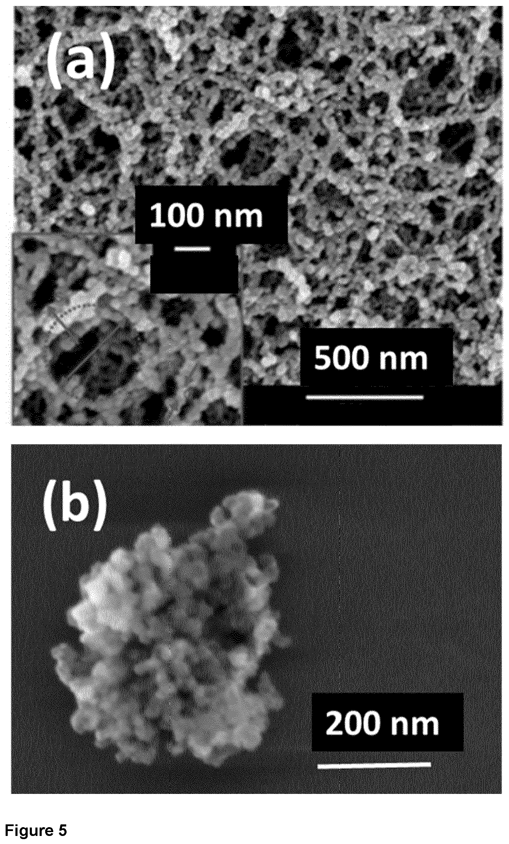

Silica aerogels, precipitated silica and colloidal silica differ in their structure (in particular, in their microstructure) and properties as consequence of their different synthesis process. Aerogels are synthesized through a supercritical drying process, while precipitated silica is made through precipitation. Colloidal silica is a suspension of discrete fine and amorphous spherical silica particles in water having sizes of about 12 nm. Figure 5 shows scanning electron microscopy micrographs of (a) silica aerogel, and (b) precipitated silica wherein their different microstructure can be observed. Aerogels have a three-dimensional nanostructure with a high surface area and high porosity (see figure 5a). By contrast, precipitated silica is a fine, powdery substance with lower porosity and surface area (see figure 5b). Nevertheless, both of them are presented in the form of granules that are micrometers in size (see table 1 below).

Optionally, opacifiers such as TiO₂ or SiC powders, flame retardants, viscosifiers and surfactants were also added to the dispersion.

Subsequently, a nonwoven surface was created using a Fourdrinier machine to form a continuous web. This process involves the deposition of the dispersion on top of a continuous, moving framed belt. Said surface comprised at least the man-made inorganic fibres, PVA and the silica fillers described above. The nonwoven surface was then dewatered under suction with a vacuum pump until it reaches between a 20 and a 60% percentage of water by weight over the total weight of the nonwoven surface.

Then, the nonwoven surface was stabilized and dried under heating in an infrared oven at a temperature between 30 and 300 °C to obtain a nonwoven mat.

**Table 1**

| Characteristics | Silica aerogel | | Precipitated silica | Colloidal silica |
|---|---|---|---|---|
| | Hydrophobic (Z2H1 from Svenska) | Hydrophobic (Entera EV5200-5400 ^{®} from CABOT) | Hydrophobic (SIPERNAT^{®} D17 from Evonik ^{®}) | LUDOX HS 40 |
| CAS #: | 68909-20-6 | 112926-30-6 | 68611- 44- 9 | 7631-86-9 |
| Tapped or tamped density (kg/m³) DIN ISO 787 part 11 | 150 - 220 | | 150 | 210-300 |
| Bulk density (kg/m³) | | 75-100 | | 1300 |
| Particle size, laser diffraction Dᵥ50 (micrometer) ISO 13320 | 15 | 100-500* | 10 | 12 nm* |
| BET surface area (m²/g) following ISO 9277 | 120-220 | - | - | 198-258 |
| Thermal conductivity (mW/mK), hot disk, ISO 22007-2 | 28-33 | 12 | - | |

| | | | | |
|---|---|---|---|---|
| **Data extracted from the technical data sheet of the product wherein the method of measurement has not been indicated* | | | | |

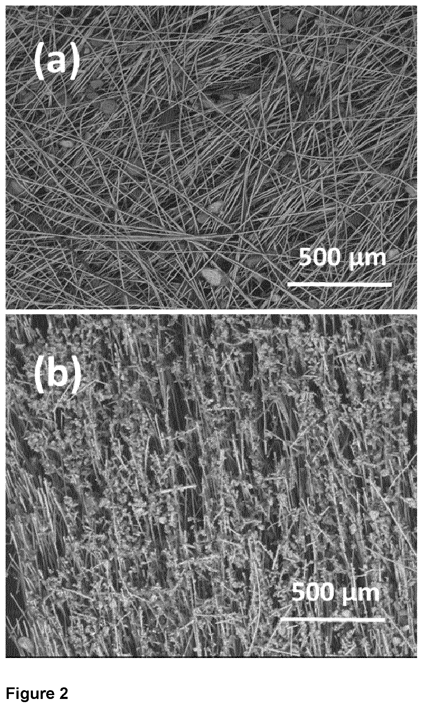

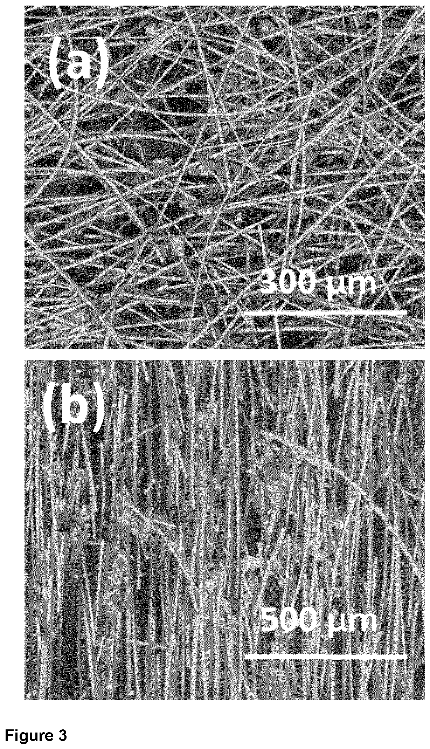

The applicants have observed that the addition of colloidal silica in the initial dispersion leads to difficulties in its incorporation into the nonwoven surface as a filler. In particular, a large portion of said colloidal silica added to the initial dispersion is not retained during the web forming step. Therefore, only nonwoven mats comprising silica aerogels or precipitated silica as fillers, were further tested. Scanning electron microscopy micrographs of nonwoven mats comprising hydrophobic silica aerogel or hydrophobic precipitated silica fillers are shown on Figures 2 and 3 respectively.

In addition, the applicants have observed an improved solvent drainage during the nonwoven mat manufacturing process when precipitated silica fillers were used in comparison to aerogels, resulting in a reduction in defects in the final product. Moreover, a better drainage allows obtaining nonwoven mats with reduced thickness. In addition, a good dewatering allows the process speed to be increased, thereby reducing the time and cost of the process and product. Furthermore, the use of precipitated silica as an alternative to aerogels has been shown to reduce significantly the cost of manufacturing the nonwoven mat.

Thermal conductivity (W/mK) values were measured based on standard method known in the art, for example: Heat Flow Meter (HFM) e.g. ASTM C518, ISO 8301, DIN EN 12667 EN 12, JIS A 1412, based on DIN EN 12664, Guarded Heat Flow Meter (GHFM) such as (ASTM E1530) and Guarded Hot Plate (GHP) such as ISO 8302, ASTM C177, DIN EN 12939, DIN EN 12667, DIN EN 13163. Thermal conductivity values of nonwoven mats having similar densities (kg/m³) and comprising hydrophobic silica aerogel or hydrophobic precipitated silica fillers, were similar.

Moreover, during the synthesis of the nonwoven mats, the applicants have observed than using man-made inorganic fibers comprising hydroxyl groups (OH) on their surface and having a mean diameter equal or over 6 microns, in combination with precipitated silica, leads to a reduced amount of water in the nonwoven surface before the drying step or before an optional impregnation step followed by a drying step.ln addition, these types of fibres in combination with precipitated silica help in the retention of fillers.

### Example 2: Mechanical properties of nonwoven mats with no SiO₂ fillers or with different SiO₂ fillers.

Various nonwoven mats have been synthesized using the process described in Example 1. These mats have a similar amount of fibers and polymeric binder among them, but they have either no SiO₂ filler, or different types of SiO₂ fillers as: (i) aerogel, or (ii) precipitated silica described on example 1. Their mechanical properties were compared. In particular, compression tests were performed to characterize their behavior under compressive loading. The nonwoven mats deformation rate (%) under pressure or stress (measured as kPa) was tested using a Shimadzu^{®} machine based on an ASTM D3574 standard method known in the art. For example, a sample is compressed using a load to a predetermined percentage of its original thickness (e.g., 50%) and held for a set duration at a specified temperature. After the load is removed, the material's recovery is measured to determine how much deformation remains. The test is repeated at different deformation %.

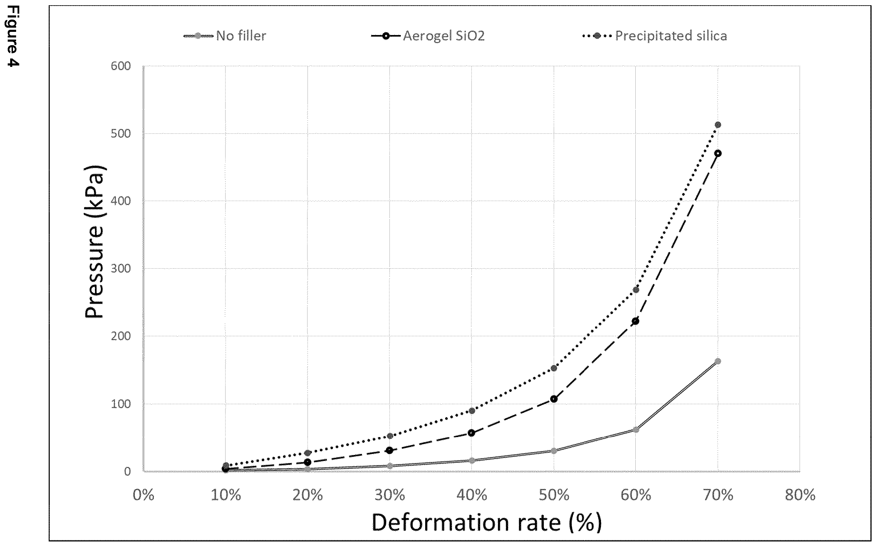

The results for the deformation rate (%) under pressure (kPa) for the nonwoven mats are shown in the table 2 below and on Figure 4.

| Pressure (kPa) vs Deformation rate( %) | | | | | | | |
|---|---|---|---|---|---|---|---|
| **FILLERS** | **10%** | **20%** | **30%** | **40%** | **50%** | **60%** | **70%** |
| No filler | 2 | 3 | 8 | 16 | 30 | 62 | 163 |
| Aerogel SiO₂ | 4 | 14 | 31 | 57 | 107 | 222 | 470 |
| Precipitated silica | 9 | 27 | 52 | 90 | 153 | 269 | 513 |

The curves for deformation rates (%) under pressure (kPa) of non-woven mats having similar densities (between about 92 and about 95 kg/m³), showed higher pressure values for non-woven mats comprising hydrophobic precipitated silica fillers than for those comprising aerogel fillers. Particularly for deformations rates equal or below 70% (see results showed on Figure 4).

Thus, nonwoven mats comprising precipitated silica as filler have an unexpectedly better mechanical response for deformations equal or below 70% than when comprising aerogels. The nonwoven mats having no SiO₂ fillers had the worst mechanical results for all deformation rates.

### Example 3: Preparation of a nonwoven mat with an infiltration step.

A nonwoven mat was prepared according to the procedure described in Example 1. However, in the present example, a composition comprising an inorganic binder such as alumina in water, was infiltrated into the nonwoven surface under suction to obtain an infiltrated nonwoven surface prior to the drying step.

The addition of impregnated binders under suction resulted in better mechanical and insulating properties in the final nonwoven mat compared to mats obtained without the impregnation step. The authors have observed that this effect is particularly relevant when the mat comprises man-made inorganic fibers comprising hydroxyl groups (OH) on their surface, and precipitated silica.

### Example 4: Preparation of nonwoven mats comprising different amounts of precipitated silica.

Nonwoven mats were prepared according to the process described in Example 1 having a density of between 95 and 100 kg/m^{3.} However, the amount of precipitated silica added in the initial dispersion was increased from about 0.4 g/l to about 0.9 g/l. Pressure results for the nonwoven mats obtained at a deformation rate of 70% increased from 270 kPa to over 550 kPa, respectively.

As demonstrated by these findings, the mechanical properties of the nonwoven mat are significantly improved by increasing the amount of precipitated silica. The results have shown that the method of the present invention makes it possible to obtain non-woven mats with tunable mechanical properties.

### Example 5: Preparation of a nonwoven mat comprising a different amounts of organic binder.

Nonwoven mats were prepared according to the process described in Example 1 but with different amounts of poly(vinyl alcohol)(PVA) fibers in the initial dispersion: about 0.06 g/l and about 0.10 g/l. The pressure results for a deformation rate of 70% were 300 kPa and 470 kPa, respectively. Thus, by increasing the amount of organic binder, the mechanical response of the nonwoven mat was improved.

### Example 6: Preparation of a nonwoven mat comprising two types of fibers.

A nonwoven mat was prepared according to the procedure described in Example 1 but comprising:- about a 50% of the total weight of fibers being man-made inorganic fibers comprising a high density of hydroxyl groups (OH) on their surface; and - the rest of the fibers being the same type of fibers but with a low density of hydroxyl groups (OH) on their surface.

Man-made inorganic fibers comprising a high density of hydroxyl groups (OH) on their surface have a loss on ignition (LOI) value of over 6%. Fibers with a low density of hydroxyl groups (OH) on their surface have a LOI value of below 4%.

The LOI value indicates the weight loss percentage of the material during the firing process measured according to standard industry methods. For instance, the material is typically fired at approximately 1000°C and the weight loss is then calculated.

The applicants have observed an improvement in the deformation behavior of the nonwoven mat under pressure when a mixture of the two types of fibres described above were used. Furthermore, when these two types of fibres are used, the nonwoven mat exhibits fewer defects (particularly fewer surface defects, such as a smooth surface) than when only one type of fibre is used.

### Example 7: Preparation of a nonwoven mat comprising fibers with different diameters.

A nonwoven mat was prepared according to the procedure described in Example 1 but comprising man-made inorganic fibers with diameters of about 7.5 microns and of about 11 microns (being measured by methods known in the art, for example according to the standard DIN 53811).

The applicants have observed an improvement in the deformation behavior of the nonwoven mat under pressure when fibers with diameters of about 7.5 microns were used.

### Example 8: Preparation of a calendered nonwoven mat.

A nonwoven mat is prepared according to the procedure described in Example 1. Said nowoven mat is then calendered. The applicants observe an improvement in the deformation behavior of the calendered nonwoven mat under pressure.

### Example 9: Preparation of a battery housing.

A battery housing is made by blending two die-cut sheets consisting of the nonwoven mat of example 1 comprising precipitated silica.

### Example 10: Preparation of a battery pack.

A battery pack is prepared by introducing a plurality of batteries in the battery housing of example 9.

## Claims

1. A nonwoven mat for thermal insulation and protection from fire obtainable by a method comprising the steps of:
i) providing a dispersion comprising:
- a plurality of man-made inorganic fibers comprising hydroxyl groups (OH) on their surface and wherein said plurality of man-made inorganic fibers have a mean diameter equal or over 6 microns;
- a polymeric binder;
- precipitated silica; and
- a solvent;
ii) web forming the dispersion of step (i) to obtain a nonwoven surface;
iii) draining the nonwoven surface of step (ii) under suction until the nonwoven surface has less than a 65% by weigh of the solvent with respect to the total weight of the nonwoven surface;
iv) optionally, infiltrating under suction the drained nonwoven surface of step (iii) with a mixture comprising at least a binder to obtain an infiltrated drained nonwoven surface;
v) heating the drained nonwoven surface obtained in step (iii) or the infiltrated drained nonwoven surface obtained in step (iv) at a temperature between 30 and 400°C to obtain a nonwoven mat; and
vi) optionally, calendering the nonwoven mat of step (v).

2. The nonwoven mat according to claim 1, wherein the precipitated silica is hydrophobic or hydrophilic; preferably hydrophobic.

3. The nonwoven mat according to claim 1 or claim 2,
- wherein the precipitated silica comprises a SiOz content of over 95% according to ISO 326219; and/or
- wherein the precipitated silica comprises methyl groups on its surface; and/or
- wherein the precipitated silica is in between 10 and 70 wt% of the total weight of the nonwoven mat.

4. The nonwoven mat according to any of claims 1 to 3, wherein the plurality of man-made inorganic fibers comprising hydroxyl groups (OH) on their surface are a mixture of: (i) fibers having a loss of ignition (LOI) value of over 6%, and (ii) fibers having a loss on ignition (LOI) value of below 4%.

5. The nonwoven mat according to any of claims 1 to 4, wherein the plurality of man-made inorganic fibers have a mean diameter of between 6 and 10 microns.

6. The nonwoven mat according to any of claims 1 to 5, wherein the infiltration step (iv) is not optional, and the mixture of step (iv) comprises:
- an inorganic binder is selected from colloidal silica, alumina, aluminium phosphates, sodium silicate or mixtures thereof; and
- optionally, an organic binder selected from poly(vinyl alcohol), a dispersion comprising ethylene, vinyl acetate or a mixture thereof.

7. The nonwoven mat according to any of claims 1 to 6, wherein the polymeric binder of step (i) is selected from poly(methyl methacrylate) (PMMA), polycarbonate (PC), polystyrene (PS), polypropylene (PP), polyethylene (PE), polyglycolide (PGA), poly(propylenefumarate) (PPF), poly(cyanoacrylate) (PCA), polycaprolactone (PCL), poly(glycerol sebacate) (PGS), poly(glycerol sebacate acrylate) (PGSA), polyvinylidene fluoride (PVDF), polyvinylidene chloride (PVDC), polybutylene terephtalate (PBT), polyphenylene oxide (PPO), polyvinyl chloride (PVC), cellulose acetate (CA), cyclic olefin copolymer (COC), ethylene vinyl acetate (EVA), ethylene vinyl alcohol (EVOH), polytetrafluoroethylene (PTFE), fluorinated ethylene propylene (FEP), perfluoroalkoxy (PEA), ethylene tetrafluoroethylene (ETFE), polyethersulfone (PES), chlorinated polyethylene (CPE), polylactic acid (PLA), poly 3-hydroxybutyrate (P3HB), polybutylene adipate (PBA), polyethylene adipate (PEA), polybutylene succinate (PBS), polyphenylene sulfide (PPS), polysulfone (PSU), polytrimethylene terephthalate (PTT), polyurethane (PU), polyvinyl acetate, polyvinylidene chloride (PVDC), styrene acrylonitrile (SAN), polyetherketones (PEEK), poly(vinylalcohol) (PVA), polyhydroxyethylmethacrylate (PHEMA), poly(N-isopropylacrylamide) (PNIPAAm) and mixtures thereof; preferably wherein the polymeric binder of step (i) is poly(vinyl alcohol).

8. The nonwoven mat according to any of claims 1 to 7, wherein the polymeric binder is in the nonwoven mat in a weight percentage of between 5 and 20 % of the total weight of the nonwoven mat.

9. A method for the preparation of the nonwoven mat for thermal insulation according to any of claims 1 to 8 comprising the steps of:
i) providing a dispersion comprising:
- a plurality of man-made inorganic fibers comprising hydroxyl groups (OH) on their surface, wherein said plurality of man-made inorganic fibers have a mean diameter equal or over 6 microns;
- a polymeric binder;
- precipitated silica, and
- a solvent;
ii) web forming the dispersion of step (i) to obtain a nonwoven surface;
iii) draining the nonwoven surface of step (ii) under suction until the nonwoven surface has less than a 65% by weigh of the solvent of the total weight of the nonwoven surface;
iv) optionally, infiltrating under suction the drained nonwoven surface of step (iii) with a mixture comprising at least a binder to obtain an infiltrated drained nonwoven surface; and
v) heating the drained nonwoven surface obtained in step (iii) or the infiltrated drained nonwoven surface obtained in step (iv), at a temperature between 30 and 400°C to obtain a nonwoven mat;
vi) optionally, calendering the nonwoven mat of step (v).

10. A partition member adapted for forming a partition between two battery cells or between a single battery cell and a member other than said single battery cell, wherein the partition member comprises at least one nonwoven mat according to any of claims 1 to 8.

11. A battery housing that defines at least a cavity for receiving at least one battery cell; wherein the battery housing comprises the partition member according to claim 10 and/or the nonwoven mat according to any of claims 1-8.

12. The battery housing according to claim 11 being made by blending one or more die-cut sheets; preferably by blending one or more die-cut sheets consisting of the nonwoven mat.

13. Use of the nonwoven mat according to any of claims 1 to 8, the partition member according to claim 10, or the battery housing according to claims 11 or 12 for thermal insulation; preferably for thermal insulation of batteries; more preferably for thermal insulation of batteries of electric vehicles.

14. Use of the nonwoven mat according to any of claims 1 to 8, the partition member according to claim 10, or the battery housing according to claims 11 or 12 for fire protection; preferably for protecting batteries from fire; more preferably for protecting electric vehicle batteries from fire.

15. A battery pack comprising:
- a plurality of batteries, and
- the partition member of claim 10 and/or the battery housing according to any of claims 11 or 12.
